# EUROPEAN PATENT APPLICATION

(11) **EP 4 596 755 A1**
(43) Date of publication of application: **06.08.2025**
(21) Application number: 24306686.7
(22) Date of filing: 14.10.2024
(51) Int. Cl.: C25B 1/04, C25B 9/70, C25B 15/08

(54) **ELECTROLYSIS PLANT WITH MUTUALIZATION AND MODULARIZATION FOR HYDROGEN PRODUCTION**

(30) Priority: 31.01.2024 FR 2400933
(71) Applicant: Rely S.A., 1210 Brussels (BE)
(72) Inventor: Goddin, Christophe, 1210 Brussels (BE)
(74) Representative: Edson, Russell Gregory

(57) **Abstract**

A hydrogen production facility is disclosed, comprising: a plurality of electrolysis systems to electrolyze water using lye; and a mutualized lye circulation system coupled with the plurality of electrolysis systems to circulate the lye among the plurality of electrolysis systems to facilitate electrolyzing the water, the lye circulation system comprising one or more pumps, wherein a number of the one or more pumps is less than a number of electrolysis systems of the plurality of electrolysis systems. A hydrogen production facility comprising first and second modular structures is also disclosed.

## Description

### Technical Field

The present disclosure relates to facilities for production of Hydrogen by electrolysis.

### Background

Hydrogen can be an alternative energy source to hydrocarbons because it is an easily storable source of energy as compared to electricity, and oxidation of hydrogen releases a very high amount of energy. Hydrogen can be produced by one or more water electrolyzer system using electrolysis to separate water into dihydrogen and dioxygen. Produced hydrogen can be green hydrogen and can be used as a clean energy vector, transported easily, stored easily, and the like. Optimizing the electrolysis plants to enhance the productivity, the safety, and the like of the electrolysis plants can be challenging.

### Summary of the Disclosure

In one aspect, the disclosure relates to a hydrogen production facility, which may comprise any or all of the following features:
a plurality of electrolysis systems to electrolyze water using lye; and
a mutualized lye circulation system coupled with the plurality of electrolysis systems to circulate the lye among the plurality of electrolysis systems to facilitate electrolyzing the water, the lye circulation system comprising one or more pumps, wherein a number of the one or more pumps is less than a number of electrolysis systems of the plurality of electrolysis systems.

In another aspect, the disclosure relates to a hydrogen production facility which may comprise any or all of the following features:
a first modular structure comprising:
   a first set of electrolysis systems;
   a first set of power conversion units; and
   a first set of separators, wherein the first set of electrolysis systems, the first set of power conversion units, and the first set of separators are installable in the first modular structure prior to the first modular structure being provided to and installed in the hydrogen production facility; and
a second modular structure that is different than the first modular structure, the second modular structure comprising:
   a second set of electrolysis systems that is different than the first set of electrolysis systems;
   a second set of power conversion units that is different than the first set of power conversion units; and
   a second set of separators that is different than the first set of separators, wherein the second set of electrolysis systems, the second set of power conversion units, and the second set of separators are installable in the second modular structure prior to the second modular structure being provided to and installed in the hydrogen production facility.
Further examples and alternative features are disclosed in later sections of the description.

### Brief Description of the Drawings

One or more examples of the invention will now be described, by way of example only, with reference to the accompanying drawings, in which:
FIG. 1 is a perspective view of an example of an electrolysis plant;
FIG. 2 is a set of views of portions of an electrolysis plant;
FIG. 3 is a schematic view and an image of a system that includes set of electrolysis systems;
FIG. 4 is a perspective view of an example of a modular structure that can be installed at the electrolysis plant;
FIG. 5 is a simplified schematic of mutualization of components for the electrolysis plant; and
FIG. 6 is a schematic block diagram of a hydrogen production system that can be used in an electrolysis plant.

### Detailed Description

Certain aspects and features of the present disclosure relate to an electrolysis plant incorporating mutualization and modularization for hydrogen production. The electrolysis plant can be used to generate green hydrogen, for example by separating input water into output hydrogen and output oxygen. The output hydrogen can be or include the green hydrogen that can be used as a fuel source, as an input to a subsequent process, or the like. The electrolysis plant, or one or more components thereof, may be mutualized, may be modularized, may be optimized, or any combination thereof to enhance, compared to other electrolysis plants that do not involve mutualization or modularization, a productivity of the electrolysis plant, an efficiency of the electrolysis plant, a safety of the electrolysis plant, or any combination thereof. For example, lye cleaning in the electrolysis plant can be mutualized to simplify and make more efficient the techniques for cleaning lye, which may be or include alkaline material, used in electrolysis processes. In some examples, the lye may be or include electrolyte solution that can include potassium hydroxide, sodium hydroxide, other suitable alkaline material, or any combination thereof. Additionally or alternatively, blocks of electrolysis systems, or other suitable components of the electrolysis plant, can be modularized to enhance safety and maintenance or repair operations with respect to the electrolysis plant. In some examples, modularizing components can involve preassembly of the components, which may be standardized, to simplify a construction operation using the components.

The electrolysis plant may include a control center, a set of electrolysis systems, a set of heat exchangers, a set of pumps, a set of separators, a set of coolers, a set of circulators, and the like. In some examples, a set may include one item of the respective type or more than one item of the respective type. For example, a set of electrolysis systems may include only one electrolysis system or may include more than one, such as two, three, four, or more than four, electrolysis systems. Additionally or alternatively, some of the above-mentioned sets may be combined to form a combined set. For example, the set of separators and the set of coolers may be combined, such as by being manufactured or installed together, to form a set of separators and coolers.

The electrolysis plant may be modular or may include modular components. For example, the set of heat exchangers, the set of separators, the set of coolers, and the like can be manufactured or installed together in a modular unit. The modular unit may be or include a pre-assembled building, or portion of a building, that includes the set of heat exchangers, the set of separators, the set of coolers, and the like pre-installed in optimized locations or arrangements. The modular unit can be installed, for example after pre-installing the components of the modular unit, in the electrolysis plant without needing to further install the set of heat exchangers, the set of separators, the set of coolers, and the like within the modular unit. The modular unit can enable a plug-and-play function for the electrolysis plant in which components of the electrolysis plant can be simply installed and used in the production of green hydrogen.

The electrolysis plant may include mutualized components, processes, or the like. Mutualization of components, processes, or the like can involve using fewer components, such as by sharing the components, to perform the same process, can involve performing a single process on, or with, more than one component, or the like. In some examples, the electrolysis plant can include lye mutualization, which can involve mutualizing heat exchangers, pumps, circulation lines, and the like for the set of electrolysis systems. Instead of having one pump for each electrolysis system, one pump can be used for all of the electrolysis systems, or for a subset of the electrolysis systems in which the subset includes more than one electrolysis system, in the electrolysis plant. Additionally or alternatively, instead of having one heat exchanger for each electrolysis system, one heat exchanger can be used for all of the electrolysis systems, or a subset of the electrolysis systems in which the subset includes more than one electrolysis system, in the electrolysis plant. In another example relating to mutualization in the electrolysis plant, instead of having one separator for each electrolysis system, one separator can be used for all of the electrolysis systems, or a subset of the electrolysis systems in which the subset includes more than one electrolysis system, in the electrolysis plant. In another example relating to mutualization in the electrolysis plant, instead of having one controller, such as a programmable logic controller (PLC), for each electrolysis system, one controller can be used for all of the electrolysis systems, or for a subset of the electrolysis systems in which the subset includes more than one electrolysis system, in the electrolysis plant. Other suitable examples of mutualization can be implemented in the electrolysis plant.

In some examples, lye cleaning in the electrolysis plant can be achieved in-line, in situ, or a combination thereof. In-line lye cleaning can involve installing one or more filters, one or more membranes, resin, ferrite, apatite, or the like along a lye circulation line included in the electrolysis plant. The one or more filters, one or more membranes, the resin, the ferrite, the apatite, or the like can be used to clean the lye used to facilitate production of the green hydrogen while in use such as while the lye is being circulated. In some examples, the one or more filters, one or more membranes, the resin, the ferrite, the apatite, or the like can be used to clean the lye, such as by removing contaminants, at operational conditions of the electrolysis process. The operational conditions may include an elevated temperature, an elevated pressure, an elevated pH, a velocity of lye travelling through circulation lines, or any combination thereof for producing green hydrogen via electrolysis. In some examples, the elevated temperature may be from approximately 30 °C to approximately 500 °C, or other suitable maximum temperature in which the lye is a liquid, the elevated pressure may be from approximately one bar to approximately 100 bar, such as between approximately eight barg and approximately 40 barg, and the elevated pH may be from approximately 8 to approximately 14, though other suitable examples of elevated temperature, elevated pressure, elevated pH, or a combination thereof are possible.

In situ lye cleaning may involve using a storage tank coupled with the lye circulation line to clean the lye. For example, one or more filters, one or more membranes, the resin, the ferrite, the apatite, one or more pumps, and the like can be installed in the storage tank for cleaning the lye. The storage tank can be installed adjacent to the lye circulation line. For example, the lye circulation line may be coupled with the storage tank, but the lye circulating through the lye circulation line may not be forced to go into the storage tank after each pass of the lye through the lye circulation line. For example, the lye circulation line may have a valve that can be selectively opened to allow the lye to be passed from the lye circulation line into the storage tank, from the storage tank into the lye circulation line, or a combination thereof. While in the storage tank, the lye can be cleaned, such as via the one or more filters, the one or more membranes, the one or more pumps, and the like. Conditions in the storage tank may be similar but not identical to operational conditions within the lye circulation line. For example, while the operational conditions within the lye circulation line may involve an elevated temperature, an elevated pressure, an elevated pH, or a combination thereof, the conditions in the storage tank may involve an ambient temperature and an elevated pH. The one or more filters, the one or more membranes, the resin, the ferrite, the apatite, the one or more pumps, and the like can clean the lye under the conditions in the storage tank, and cleaned lye can be conveyed back into the lye circulation line to facilitate production of green hydrogen via electrolysis. In some examples, all of the lye can be cleaned, or a subset of all of the lye can be cleaned by bypassing from more than approximately 0% to approximately 100% of the flow of the lye.

In some examples, and due to corrosion of metallic materials with lye and oxygen, the lye circulation line, other lye conveyance lines, valves associated therewith, or any combination thereof may include non-metallic materials such as reinforced polymers, or metallic materials line with polymer, that may be applicable for industrial applications. Additionally or alternatively, the lye circulation line may not include metallic materials such as iron and other metals that can impact a performance of the electrolysis systems.

In some examples, in-line lye cleaning and in situ lye cleaning may be exclusive or may be inclusive. For example, the in-line lye cleaning and the in situ lye cleaning may be exclusive such that one or the other, but not both, are performed in the electrolysis plant. Additionally or alternatively, the in-line lye cleaning and the in situ lye cleaning may be inclusive such that both the in-line cleaning and the in situ cleaning may be performed in the electrolysis plant, for example one after the other or substantially contemporaneously with respect to one another. The lye circulation line may include the one or more filters, the one or more membranes, the resin, the ferrite, the apatite, or the like that can clean the lye inline, and the lye circulation line may be coupled with the storage tank that can perform in situ cleaning of the lye. Additionally or alternatively, in-line lye cleaning, in situ lye cleaning, or a combination thereof can be performed with mutualized lye circulation loops. For example, mutualization including lye cleaning can involve a cleaning pathway shared through lye circulation lines from multiple electrolysis systems or can involve lye circulation lines from multiple electrolysis systems going into separate storage tanks for in situ lye cleaning.

These illustrative examples are given to introduce the reader to the general subject matter discussed herein and are not intended to limit the scope of the disclosed concepts. The following sections describe various additional features and examples with reference to the drawings in which like numerals indicate like elements, and directional descriptions are used to describe the illustrative aspects, but, like the illustrative aspects, should not be used to limit the present disclosure.

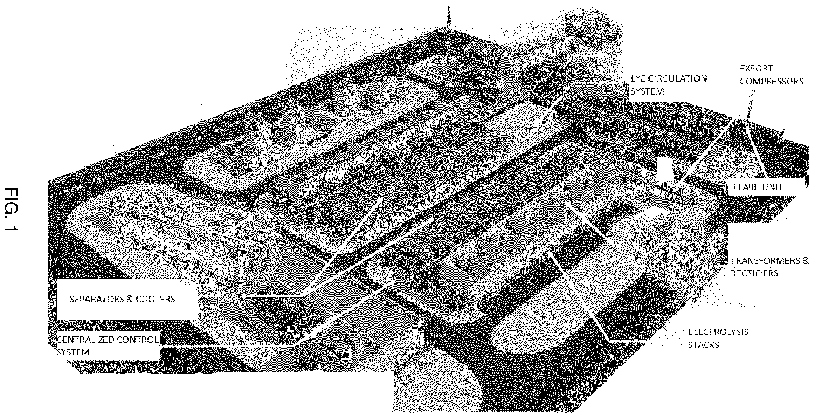

FIG. 1 is a perspective view of an example of an electrolysis plant that can include mutualized components, modularized components, optimized components, and the like for generating green hydrogen and for performing other suitable electrolysis operations according to one example of the present disclosure. As illustrated in FIG. 1, the electrolysis plant can include a set of electrolysis systems, gas separators and coolers, a centralized control system, a set of transformers, a set of rectifiers, a circulation system, hydrogen export compressors, and a hydrogen flare unit. Additional or alternative components are possible to include in the electrolysis plant.

The centralized control system may include a single control system, such as a programmable logic controller (PLC), that can control the operations that can be performed by the electrolysis plant. In some examples, the centralized control system may include more than one control system, such as more than one PLC, but each control system included in the centralized control system may control more than one operation that can be performed by the electrolysis plant. In some examples, a single PLC can be included in the centralized control system, and the single PLC can control each electrolysis operation, or any subset thereof that includes more than one operation, that can be performed by the set of electrolysis systems included in the electrolysis plant. In some examples, the centralized control system may include an interface that can provide users with the capability to control, such as alter, halt, commence, etc., more than one operation that can be performed by the electrolysis plant or any components thereof. In some examples, the interface may provide options to (i) halt more than one electrolysis operation to perform maintenance, repair, or replacement on the respective electrolysis systems, and (ii) then to commence the halted operations once the maintenance, repair, or replacement is performed. Other examples of control by the centralized control system are possible.

The set of electrolysis systems can include one electrolysis system, two electrolysis systems, three electrolysis systems, four electrolysis systems, or more than four electrolysis systems. Each electrolysis system of the set of electrolysis systems may be arranged to receive inputs, such as water, lye, which may also include water, energy, and the like, and generate outputs such as hydrogen, oxygen, and the like. In some examples, the set of electrolysis systems can be separated into a first subset of electrolysis systems and a second subset of electrolysis systems, and the first subset can be positioned in a first building, while the second subset can be positioned in a second building that is offset from the first building. In some examples in which there are 20 electrolysis systems included in the set of electrolysis systems, the first subset can include 10 electrolysis systems, and the second subset can include 10 electrolysis systems. Other examples, such as those in which the first subset and the second subset include different numbers of electrolysis systems individually and with respect to one another, are possible.

The first building and the second building may each have an interior and a roof. The first subset of electrolysis systems may be positioned in the interior of the first building, and the second subset of electrolysis systems may be positioned in the interior of the second building. The first subset and the second subset may each be coupled with or otherwise associated with transformers and rectifiers. For example, the first subset of electrolysis systems can be coupled with a first subset of transformers and a first subset of rectifiers, and the second subset of electrolysis systems may be coupled with a second subset of transformers and a second subset of rectifiers. The first subset of transformers and the second subset of transformers may form the set of transformers, and the first subset of rectifiers and the second subset of rectifiers may form the set of rectifiers. The first subset of transformers and the first subset of rectifiers may be positioned on the roof of the first building, and the second subset of transformers and the second subset of rectifiers may be positioned on the roof of the second building. In some examples, at least a portion of the first subset of transformers, a portion of the second subset of transformers, or a combination thereof can be positioned on a floor of the respective building.

In some examples, the set of transformers, the set of rectifiers, or a combination thereof, such as a power conversion unit, which may also include a polarization unit to prevent a reverse current in the event of a sudden shut down, may be mutualized. Mutualizing the set of transformers, the set of rectifiers, or a combination thereof may involve having a ratio of transformers-to-electrolysis systems, of rectifiers-to-electrolysis systems, or a combination thereof that is less than one, which may indicate that more than one electrolysis system can be serviced by one transformer, one rectifier, or a combination thereof. In some examples, a single transformer, a single rectifier, or a combination thereof can be positioned on the roof of the first building to provide respective service for the first subset of electrolysis systems, and a single transformer, a single rectifier, or a combination thereof can be positioned on the roof of the second building to provide respective service for the second subset of electrolysis systems. In other examples, one transformer, such as a 20 MW transformer, may be used to provide service, such as power, for approximately four electrolysis systems, which each may be 5 MW. In this example, the approximately four electrolysis systems may be arranged in series, in parallel, or partially in series and partially in parallel. Other suitable examples, such as partial mutualization of the transformers, of the rectifiers, or a combination thereof, are possible.

The gas separators and coolers can be positioned adjacent to the first building, to the second building, or to a combination thereof. For example, the gas separators and coolers can include a first subset of gas separators and coolers and a second subset of gas separators and coolers. The first subset of gas separators and coolers can be positioned adjacent to the first building, and the second subset of gas separators and coolers can be positioned adjacent to the second building. The first subset of gas separators and coolers can provide functionality, such as separating hydrogen and oxygen, cooling the separated gas, or the like, for the first subset of electrolysis systems, and the second subset of gas separators and coolers can provide functionality, such as separating hydrogen and oxygen, cooling the separated gas, or the like, for the second subset of electrolysis systems. In some examples, the first subset of gas coolers and separators, the second subset of gas coolers and separators, or a combination thereof may be positioned on a raised structure that can allow personnel or other entities to be or move underneath or behind the first subset of gas coolers and separators, the second subset of gas coolers and separators, or a combination thereof.

The set of electrolysis systems, the set of transformers, the set of rectifiers, the gas separators and coolers, the first building, the second building, or any combination thereof may be modular. For example, at least some of the set of electrolysis systems, the set of transformers, the set of rectifiers, the gas separators and coolers, the first building and the second building may be pre-manufactured and pre-installed prior to being provided to the electrolysis plant. In some examples, a first section of the first building that includes a portion of the first subset of electrolysis systems, a portion of the first subset of transformers, and a portion of the first subset of rectifiers can be pre-formed as a first modular structure prior to being provided to the electrolysis plant, and, in response to being provided to the electrolysis plant, the first modular structure can be simply installed into a predetermined location of the electrolysis plant. In some examples, additional or alternative components, such as the gas coolers and separators, of the electrolysis plant can be included in the first modular structure or in other suitable modular structures.

The circulation system can be positioned adjacent, or otherwise proximate, to the first building, the second building, or a combination thereof. In some examples, the circulation system may be or include a lye circulation and cooling system that can provide lye to the set of electrolysis systems to facilitate electrolysis reactions. The lye, which may be or include an alkaline material, such as sodium hydroxide, potassium hydroxide, or other suitable alkaline materials, can be circulated to the set of electrolysis systems to cause hydrogen to be separated from oxygen in input water.

The circulation system may be mutualized with respect to the set of electrolysis systems. For example, the circulation system may circulate the lye to more than one electrolysis system of the set of electrolysis systems. In some examples, the circulation system may be fully mutualized, which may involve a single circulation system, such as a single pump, one set of circulation lines, and the like, that can circulate the lye to each electrolysis system of the set of electrolysis systems. Additionally or alternatively, the circulation system may provide lye cooling for each electrolysis system of the set of electrolysis systems.

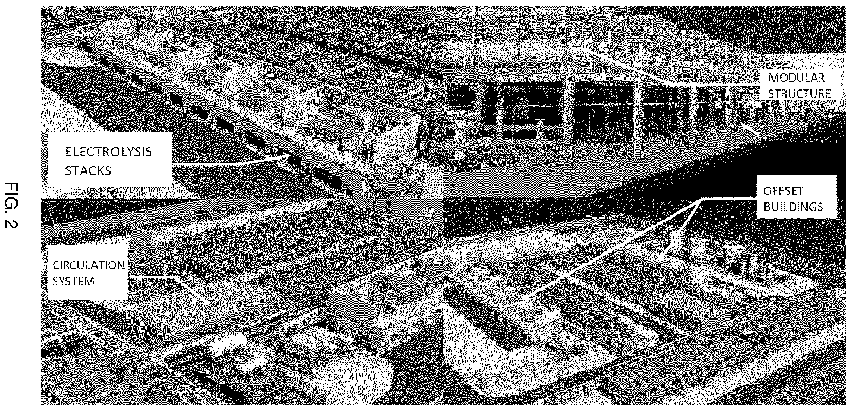

FIG. 2 is a set of views of portions of the electrolysis plant that can include mutualized components, modularized components, optimized components, and the like for generating green hydrogen and for performing other suitable electrolysis operations according to one example of the present disclosure. As illustrated in FIG. 2, four views are shown to highlight various features of the electrolysis plant. For example, a first view, in the upper-left of FIG. 2, illustrates a first building of the electrolysis plant, a second view, in the upper-right of FIG. 2, illustrates a modular feature of the electrolysis plant, a third view, in the bottom-left of FIG. 2, illustrates a mutualization feature of the electrolysis plant, and a fourth view, in the bottom-right of FIG. 2, illustrates an optimization feature of the electrolysis plant. Other suitable views of the electrolysis plant are possible.

In the first view, the first building of the electrolysis plant is illustrated. The first building may house at least a subset of the set of electrolysis systems and associated components for providing functionality for the at least the subset of the set of electrolysis systems. For example, the first building can house the first subset of electrolysis systems, the first subset of transformers, the first subset of rectifiers, other suitable components, or any combination thereof. In some examples, the first building can include the first subset of electrolysis systems in an interior of the first building and can include the first subset of transformers and the first subset of rectifiers on a roof of the first building. Including the first subset of transformers and the first subset of rectifiers on the roof can allow the set of electrolysis systems to be optimally arranged in the interior of the first building. For example, a number of electrolysis systems can be maximized, spacing between the electrolysis systems can be optimized to ensure compliance and safety, maintenance access, and the like. Additionally or alternatively, including the first subset of transformers and the first subset of rectifiers on the roof can allow free access to the first subset of electrolysis systems. Free access to the first subset of electrolysis systems can make maintenance, repair, and replacement of the first subset of electrolysis systems easier, safer, quicker, possible, or the like.

In the second view, one possible example of a modular feature of the electrolysis plant is illustrated. The example of the modular feature is a modular structure that includes gas separators and coolers. The gas coolers and separators can be positioned adjacent, or otherwise proximate, to the set of electrolysis systems to provide separation and cooling functionality for each electrolysis system of the set of electrolysis systems. The gas coolers and separators can be located on a roof or a second floor of the modular structure. Additionally or alternatively, the modular structure may include a mutualized drainage circuit and pit to recover lye in case of leakage. The modular structure can include a retaining structure and at least a subset of the gas separators and coolers. The retaining structure may provide a scaffold or may otherwise provide at least a partial surface onto which the subset of the gas separators and coolers can be positioned. In some examples, the modular structure can cause the subset of gas separators and coolers to be raised to provide free access under the subset of gas separators and coolers and, in some cases, to a side of the set of electrolysis systems. The modular structure can be pre-formed prior to being provided to the electrolysis plant. For example, the retaining structure can formed at a manufacturing location, and the subset of gas separators and coolers can be installed in the retaining structure at the manufacturing location, or at a separate location, prior to being provided to the electrolysis plant.

In some examples, the modular structure can be combined with at least a portion of the first building. For example, a portion of the first building can be pre-formed prior to being provided to the electrolysis plant, and the portion of the first building can be combined with, such as affixed to, coupled with, etc., the modular structure to form a combined modular structure. The combined modular structure can be provided to the electrolysis plant at which the combined modular structure can be easily installed without needing to install individual components such as individual electrolysis systems, gas separators or coolers, etc. Other suitable examples of modularization of the components of the electrolysis plant are possible.

In the third view, one possible example of a mutualization feature of the electrolysis plant is illustrated. The third view illustrates a circulation system of the electrolysis plant, though other suitable components or features, such as transformers, separators, hydrogen and oxygen gas washing and cooling, a vent or flaring system, etc., can additionally or alternatively be mutualized, for example fully or partially, in the electrolysis plant. The circulation system may be or include a lye circulation system that can provide lye to the set of electrolysis systems to facilitate one or more electrolysis operations such as to generate green hydrogen. In some examples, the circulation system may include one or more pumps, one or more circulation lines or conduits, one or more storage tanks, and the like to circulate the lye to the set of electrolysis systems. Mutualizing the circulation system may involve using one circulation system, which may include a pump, one or more filters, a circulation loop, and the like in which the circulation loop can include conduits or other means for transporting the lye, to circulate lye to more than one electrolysis system. For example, and instead of having one circulation system for each electrolysis system, one circulation system can provide lye to, and receive lye from, more than one electrolysis system of the set of electrolysis systems. Full mutualization of the circulation system may involve having one circulation system that circulates the lye among all electrolysis systems of the set of electrolysis systems.

In some examples, optimized or otherwise enhanced cleaning procedures or arrangements can be used for the circulation system such as with the mutualization of the circulation system or without the mutualization of the circulation system. For example, in-line lye cleaning, in situ lye cleaning, or the like can be performed in the circulation system. In-line lye cleaning can involve positioning membranes, filters, the resin, the ferrite, the apatite, or the like along the lye circulation lines to clean the lye while in operation. The membranes, filters, and the like may clean the lye at operational conditions, which may involve elevated temperature, elevated pH, or a combination thereof. Additionally or alternatively, one or more storage or sequestration tanks can be positioned in the electrolysis plant and coupled with the lye circulation lines. The storage tanks can be positioned adjacent or proximate to the lye circulation lines, and the storage tanks may include membranes, filters, the resin, the ferrite, the apatite, pumps, and other components that can be used to clean the lye. The lye can be provided, such as via one or more valves on the lye circulation lines, to the storage tank, which can facilitate cleaning the lye at conditions that are similar, but not identical, to the operational conditions. For example, the conditions may involve ambient temperature and elevated pH.

In the fourth view, one possible example of an optimized layout of the electrolysis plant is illustrated, though other suitable optimizations associated with the electrolysis plant are possible. The optimized layout can involve positioning the first building and the second building, along with the components included therein and coupled thereto, to allow mutualization, easy maintenance, repair, and replacement, and the like with respect to the electrolysis plant. For example, positioning the first building offset from, and facing in an opposite direction with respect to, the second building can allow mutualization of the circulation system, the gas separators and coolers, and the like. For example, a larger number of transformers and rectifiers can be mutualized compared to other arrangements of the first building and the second building, and the circulation system can be mutualized for more electrolysis systems compared with the other arrangements. Additionally or alternatively, positioning the first building offset from, and facing in an opposite direction with respect to, the second building can optimize maintenance, repair, and replacement operations with respect to the electrolysis systems and related components. For example, positioning the first building offset from, and facing in an opposite direction with respect to, the second building can allow free access to the electrolysis systems and related components and can improve a safety and efficiency of maintenance, repair, and replacement operations with respect to the electrolysis systems and related components.

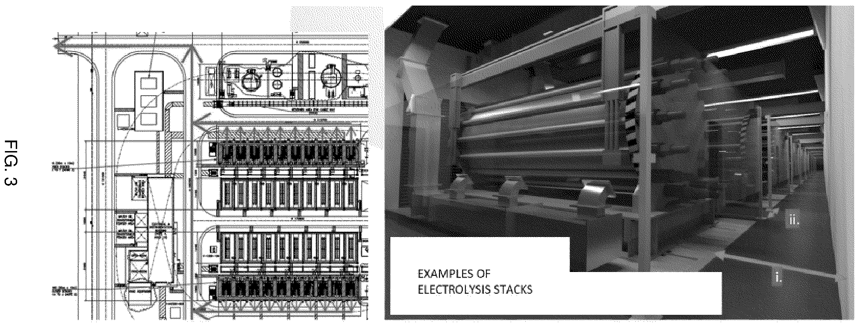

FIG. 3 is a schematic view and an image of a system that includes set of electrolysis systems. As illustrated in FIG. 3, the set of electrolysis systems can be in arrangements that can optimize, such as maximize, safety, compliance, and the like with respect to the set of electrolysis systems. The arrangement can involve a first distance between each electrolysis system and a wall of a building in which the set of electrolysis systems is disposed and a second distance between each electrolysis system and an adjacent electrolysis system. The first distance may be one meter, though other suitable distances, such as less than one meter or more than one meter, are possible. Additionally or alternatively, the second distance may be 1.8 meters, though other suitable distances, such as less than one meter or more than one meter, are possible. The first distance and the second distance can allow personnel to freely access the set of electrolysis systems for maintenance, repair, or replacement operations without causing excessive risk of damage to equipment, personnel, or the like. Additionally or alternatively, the first distance and the second distance can allow a maximum number of electrolysis systems to be included in a respective building without causing excessive risk of damage to equipment, personnel, or the like. Additionally or alternatively, an integrated safety risk quantification analysis can be performed with respect to the layout of components of the electrolysis plant to optimize safe distances.

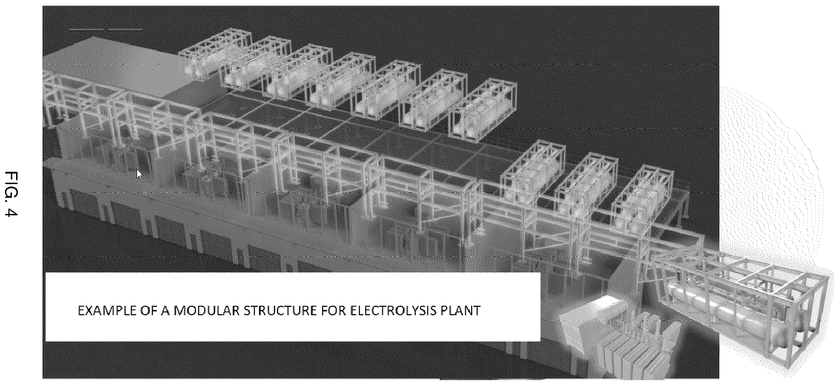

FIG. 4 is a perspective view of an example of a modular structure that can be installed at the electrolysis plant according to one example of the present disclosure. The modular structure can include a set of electrolysis systems, a set of transformers, a set of rectifiers, gas separators and coolers, a first building, a second building, or any combination thereof. In some examples, the electrolysis plant can include (i) a first type of modular structure that includes a first subset of components from the above-recited list and (ii) a second type of modular structure that includes a second subset, that is different than the first subset, of components from the above-recited list. At least some of the set of electrolysis systems, the set of transformers, the set of rectifiers, the gas separators and coolers, the first building and the second building may be pre-manufactured and pre-installed prior to being provided to the electrolysis plant. In some examples, a first section of the first building that includes a portion of the first subset of electrolysis systems, a portion of the first subset of transformers, and a portion of the first subset of rectifiers can be pre-formed as a first modular structure prior to being provided to the electrolysis plant, and, in response to being provided to the electrolysis plant, the first modular structure can be simply installed into a predetermined location of the electrolysis plant. In some examples, additional or alternative components, such as the gas coolers and separators, of the electrolysis plant can be included in the first modular structure, such as above the electrolysis systems, or in other suitable modular structures.

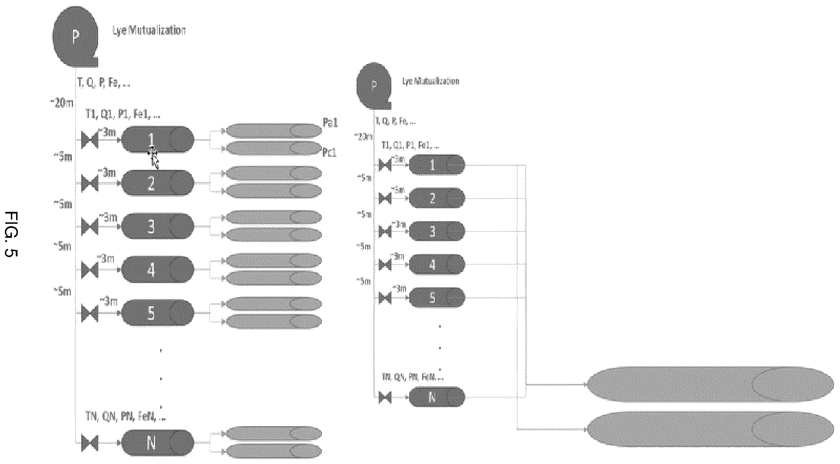

FIG. 5 is a simplified schematic of mutualization of components for the electrolysis plant. As illustrated, electrolysis systems, such as systems 1-5 & N, which can be an unbound number or electrolysis systems, can be coupled with separators. On the left side of FIG. 5, which may illustrate no mutualization of the separators, each electrolysis system may be coupled with a different set of separators, which may include a hydrogen separator and an oxygen separator. On the right side of FIG. 5, which may illustrate full mutualization of the separators, each electrolysis system may be coupled with a common set of separators. Partial mutualization, such as mutualization between no mutualization and full mutualization, of the separators is also possible for the electrolysis plant.

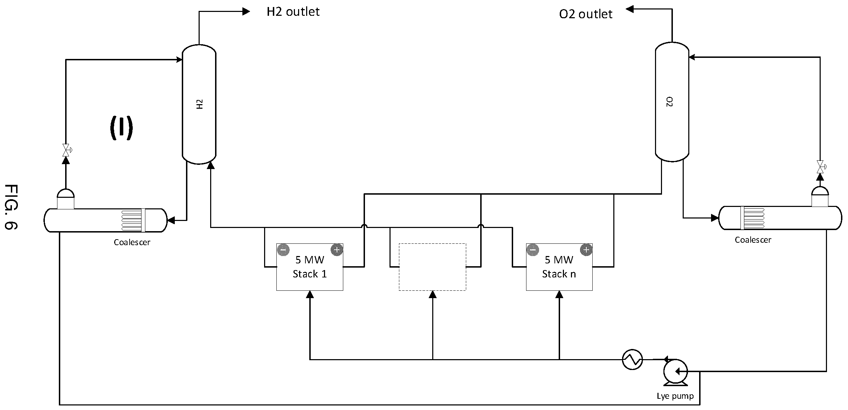

FIG. 6 is a schematic block diagram of a hydrogen production system that can be used in an electrolysis plant according to one example of the disclosure. The schematic block diagram may represent one electrolysis process that can be performed by the electrolysis plant, or the components thereof, though other suitable electrolysis processes, including multiple iterations of the process performed by the illustrated schematic block diagram, can be performed by the electrolysis plant. For example, the schematic block diagram illustrated in FIG. 6 may be a general representation of a process that can be performed at the electrolysis plant, can be a simplified version of a process that can be performed at the electrolysis plant, and the like.

FIG. 6 includes multiple electrolyzer, or electrolysis, systems, such as System 1, System n, etc., a pump, coalescers, and separators, such as a hydrogen-recovery vessel labeled as H2 and an oxygen-recovery vessel labeled as 02, though other or additional suitable components are possible. In some examples, the system pressure differential can be disconnected from the gas phase pressure differential of both separation vessels of the electrolysis system. The pressure drops in the lines can be controlled upstream of the separation, such as via the collector, which can be done by using a suitably configured separation device or by properly sizing the pipeline network. The hydrogen separator and the oxygen separator can be connected between each other through a pressure balancing line. The pressure balancing line can enter at the lowest point of the separators to allow the liquid to flow both ways from a side to another and to prevent any direct displacement of the gaseous phase from one vessel to the other. The pressure at the inlet of the separators can be coupled to the liquid level in the separator. The separator inlet can be at the bottom or near the bottom of the separator. If a distributor is considered, there can be a hole at its base. Electrolyte pumping downstream separation can be mutualized and split before entering the cell. The balancing line and the mutualization line upstream pump can be the same.

The electrolyte can be mixed from both sides. The electrolyte can be gas-free to minimize hydrogen transferring to oxygen and oxygen transferring to hydrogen, for example for safety reasons. Potassium hydroxide in solution can stabilize the gas microbubbles, which can prevent the microbubbles from fusing and forming larger bubbles that can rise quickly to the surface. Targeted purity may otherwise involve irrational residence time and separator dimensions to allow for sufficient separation in a gravity separator device. In some examples, the separation can be split into a primary separator and a coalescer.

The primary separator can remove the bulk of gas and the large bubbles from the electrolyte. The primary separator can be a dedicated vessel or a collector/decanter. A coalescer can be positioned downstream to the primary separator to reach targeted electrolyte purity. The coalescer can be of any type of coalescer. An example is a membrane type, but ultrasonic and centrifugal, among others, are also possible.

Horizontal primary separator vessels can be used. Alternatively or additionally, vertical primary separator vessels can be used to offer wider liquid differential height, and a wider allowable pressure deviation from nominal operation. This can accommodate the potential additional pressure drop in the circuit caused by the coalescer. This piece of equipment may slowly be obstructed by impurities, such as potentially asymmetrically, causing differential pressure drop, which can naturally result in variation of liquid level in the vessel. In addition, vertical primary separator vessels will require a lower volume of liquid to move from a vessel to another for balancing the same overpressure on one side.

As used below, any reference to a series of examples is to be understood as a reference to each of those examples disjunctively (e.g., "Examples 1-4" is to be understood as "Examples 1, 2, 3, or 4").

Example 1 is a hydrogen production facility comprising: a plurality of electrolysis systems to electrolyze water using lye; and a lye circulation system coupled with the plurality of electrolysis systems to circulate the lye among the plurality of electrolysis systems to facilitate electrolyzing the water, the lye circulation system comprising: one or more pumps, wherein a number of the one or more pumps is less than a number of electrolysis systems of the plurality of electrolysis systems; and a lye cleaning subsystem positionable along the lye circulation system to clean the lye.

Example 2 is the hydrogen production facility of example 1, wherein the lye circulation system comprises a set of lye circulation lines sized to convey the lye to the plurality of electrolysis systems, wherein the lye cleaning subsystem is arranged within the set of lye circulation lines to clean the lye while the lye is circulating within the lye circulation system.

Example 3 is the hydrogen production facility of example 1, wherein the lye circulation system comprises a set of lye circulation lines sized to convey the lye to the plurality of electrolysis systems, wherein the lye circulation system comprises one or more cleaning tanks couplable with the set of lye circulation lines, and wherein the one or more cleaning tanks are sized to receive and clean the lye in situ in response to conveying the lye from the set of lye circulation lines to the one or more cleaning tanks.

Example 4 is the hydrogen production facility of example 1, further comprising: a first structure having a first interior and a first roof; a second structure having a second interior and a second roof, wherein the second structure is positionable offset from the first structure; and a set of power conversion units, wherein the plurality of electrolysis systems are positionable within the first structure and the second structure, and wherein the set of power conversion units are positionable on the first building and the second building and coupled with the plurality of electrolysis systems.

Example 5 is the hydrogen production facility of any of examples 1 or 4, wherein: the plurality of electrolysis systems comprises a first subset of electrolysis systems and a second subset of electrolysis systems; the first subset of electrolysis systems is positionable in the first interior and the second subset of electrolysis systems is positionable in the second interior; the set of power conversion units comprises a first subset of power conversion units and a second subset of power conversion units; the first subset of power conversion units is positionable on the first roof and couplable with the first subset of electrolysis systems; and the second subset of power conversion units is positionable on the second roof and couplable with the second subset of electrolysis systems.

Example 6 is the hydrogen production facility of any of examples 1 or 4-5, wherein: the first subset of power conversion units comprises a first set of transformers having a first number of transformers and the second subset of power conversion units comprises a second set of transformers having a second number of transformers; the first subset of electrolysis systems comprises a third number of electrolysis systems and the second subset of electrolysis systems comprises a fourth number of electrolysis systems; and the first number of transformers is less than the third number of electrolysis systems.

Example 7 is the hydrogen production facility of any of examples 1 or 4-6, wherein the second number of transformers is less than the fourth number of electrolysis systems.

Example 8 is the hydrogen production facility of example 1, wherein the plurality of electrolysis systems are included in a modular structure that further comprises: a set of power conversion units; and a set of separators, wherein the plurality of electrolysis systems, the set of power conversion units, and the set of separators are installable in the modular structure prior to the modular structure being provided to and installed in the hydrogen production facility.

Example 9 is the hydrogen production facility of any of examples 1 or 8, further comprising a second modular structure that is different than the modular structure, the second modular structure comprising: a second plurality of electrolysis systems that is different than the plurality of electrolysis systems; a second set of power conversion units that is different than the set of power conversion units; and a second set of separators that is different than the set of separators, wherein the second plurality of electrolysis systems, the second set of power conversion units, and the second set of separators are installable in the second modular structure prior to the second modular structure being provided to and installed in the hydrogen production facility.

Example 10 is the hydrogen production facility of any of examples 1 or 8-9, wherein: the modular structure comprises a first housing that comprises a first set of walls; the plurality of electrolysis systems has a first distance measured between a first end of each electrolysis system of the plurality of electrolysis systems and at least one wall of the first set of walls; and the plurality of electrolysis systems has a second distance measured between a second end of each electrolysis system of the plurality of electrolysis systems and a third end of an adjacent electrolysis system of the plurality of electrolysis systems.

Example 11 is the hydrogen production facility of any of examples 1 or 8-10, wherein: the second modular structure comprises a second housing that comprises a second set of walls; the second plurality of electrolysis systems has a third distance measured between a first end of each electrolysis system of the second plurality of electrolysis systems and at least one wall of the second set of walls; the second plurality of electrolysis systems has a fourth distance measured between a second end of each electrolysis system of the second plurality of electrolysis systems and a third end of an adjacent electrolysis system of the second plurality of electrolysis systems; and the first distance is the same as the third distance and the second distance is the same as the fourth distance.

Example 12 is a hydrogen production facility comprising: a first modular structure comprising: a first set of electrolysis systems; a first set of power conversion units; and a first set of separators, wherein the first set of electrolysis systems, the first set of power conversion units, and the first set of separators are installable in the first modular structure prior to the first modular structure being provided to and installed in the hydrogen production facility; and a second modular structure that is different than the first modular structure, the second modular structure comprising: a second set of electrolysis systems that is different than the first set of electrolysis systems; a second set of power conversion units that is different than the first set of power conversion units; and a second set of separators that is different than the first set of separators, wherein the second set of electrolysis systems, the second set of power conversion units, and the second set of separators are installable in the second modular structure prior to the second modular structure being provided to and installed in the hydrogen production facility.

Example 13 is the hydrogen production facility of example 12, wherein: the first modular structure comprises a first housing that comprises a first set of walls; the first set of electrolysis systems has a first distance measured between a first end of each electrolysis system of the first set of electrolysis systems and at least one wall of the first set of walls; and the first set of electrolysis systems has a second distance measured between a second end of each electrolysis system of the first set of electrolysis systems and a third end of an adjacent electrolysis system of the first set of electrolysis systems.

Example 14 is the hydrogen production facility of any of examples 12-13, wherein: the second modular structure comprises a second housing that comprises a second set of walls; the second set of electrolysis systems has a third distance measured between a first end of each electrolysis system of the second set of electrolysis systems and at least one wall of the second set of walls; the second set of electrolysis systems has a fourth distance measured between a second end of each electrolysis system of the second set of electrolysis systems and a third end of an adjacent electrolysis system of the second set of electrolysis systems; and the first distance is the same as the third distance and the second distance is the same as the fourth distance.

Example 15 is the hydrogen production facility of example 12, wherein the first modular structure and the second modular structure are installable in the hydrogen production facility to form a first structure and a second structure, wherein the first structure has a first interior and a first roof, wherein the second structure has a second interior and a second roof, and wherein the first structure and the second structure are positionable offset from one another.

Example 16 is the hydrogen production facility of any of examples 12 or 15, wherein the first set of electrolysis systems and the second set of electrolysis systems are positionable in the first interior and in the second interior, and wherein the first set of power conversion units and the second set of power conversion units are positionable on the first roof and the second roof.

Example 17 is the hydrogen production facility of example 12, wherein the first set of power conversion units comprises a first set of transformers and a first set of rectifiers, wherein the second set of power conversion units comprises a second set of transformers and a second set of rectifiers, and wherein a ratio of transformers included in the first set of transformers and the second set of transformers to electrolysis systems included in the first set of electrolysis systems and the second set of electrolysis systems is less than 1.

Example 18 is a hydrogen production facility comprising: a first structure having a first interior and a first roof; a second structure having a second interior and a second roof, the second structure positionable offset from the first structure; a plurality of electrolysis systems to electrolyze water using lye, the plurality of electrolysis systems positionable in the first structure and the second structure; and a set of power conversion units couplable with the plurality of electrolysis systems to provide power for facilitating electrolysis operations performable by the plurality of electrolysis systems, the set of power conversion units positionable on the first structure and the second structure.

Example 19 is the hydrogen production facility of example 18, wherein: the plurality of electrolysis systems comprises a first subset of electrolysis systems and a second subset of electrolysis systems; the first subset of electrolysis systems is positionable in the first interior and the second subset of electrolysis systems is positionable in the second interior; the set of power conversion units comprises a first subset of power conversion units and a second subset of power conversion units; the first subset of power conversion units is positionable on the first roof and couplable with the first subset of electrolysis systems; and the second subset of power conversion units is positionable on the second roof and couplable with the second subset of electrolysis systems.

Example 20 is the hydrogen production facility of any of examples 18-19, wherein: the first subset of power conversion units comprises a first set of transformers having a first number of transformers and the second subset of power conversion units comprises a second set of transformers having a second number of transformers; the first subset of electrolysis systems comprises a third number of electrolysis systems and the second subset of electrolysis systems comprises a fourth number of electrolysis systems; the first number of transformers is less than the third number of electrolysis systems; and the second number of transformers is less than the fourth number of electrolysis systems.

The foregoing description of certain examples, including illustrated examples, has been presented only for the purpose of illustration and description and is not intended to be exhaustive or to limit the disclosure to the precise forms disclosed. Numerous modifications, adaptations, and uses thereof will be apparent to those skilled in the art without departing from the scope of the disclosure.

## Claims

1. A hydrogen production facility comprising:
a plurality of electrolysis systems to electrolyze water using lye; and
a mutualized lye circulation system coupled with the plurality of electrolysis systems to circulate the lye among the plurality of electrolysis systems to facilitate electrolyzing the water, the lye circulation system comprising one or more pumps, wherein a number of the one or more pumps is less than a number of electrolysis systems of the plurality of electrolysis systems.

2. The hydrogen production facility of claim 1, wherein the lye circulation system comprises:
a set of lye circulation lines sized to convey the lye between the plurality of electrolysis systems and a pump in a closed loop; and
a lye cleaning subsystem positionable along the lye circulation system to clean the lye, wherein the lye cleaning subsystem is arranged within the set of lye circulation lines to clean the lye while the lye is circulating within the lye circulation system.

3. The hydrogen production facility of claim 1, wherein the lye circulation system comprises a set of lye circulation lines sized to convey the lye to the plurality of electrolysis systems, wherein the lye circulation system comprises one or more cleaning tanks couplable with the set of lye circulation lines, and wherein the one or more cleaning tanks are sized to receive and clean the lye in situ in response to conveying the lye from the set of lye circulation lines to the one or more cleaning tanks.

4. The hydrogen production facility of claim 1, further comprising:
a first structure having a first interior and a first roof;
a second structure having a second interior and a second roof, wherein the second structure is positionable offset from the first structure; and
a set of power conversion units, wherein the plurality of electrolysis systems are positionable within the first structure and the second structure, and wherein the set of power conversion units are positionable on the first building and the second building and coupled with the plurality of electrolysis systems.

5. The hydrogen production facility of any of claims 1 or 4, wherein:
the plurality of electrolysis systems comprises a first subset of electrolysis systems and a second subset of electrolysis systems;
the first subset of electrolysis systems is positionable in the first interior and the second subset of electrolysis systems is positionable in the second interior;
the set of power conversion units comprises a first subset of power conversion units and a second subset of power conversion units;
the first subset of power conversion units is positionable on the first roof and couplable with the first subset of electrolysis systems; and
the second subset of power conversion units is positionable on the second roof and couplable with the second subset of electrolysis systems.

6. The hydrogen production facility of any of claims 1 or 4-5, wherein:
the first subset of power conversion units comprises a first set of transformers having a first number of transformers and the second subset of power conversion units comprises a second set of transformers having a second number of transformers;
the first subset of electrolysis systems comprises a third number of electrolysis systems and the second subset of electrolysis systems comprises a fourth number of electrolysis systems; and
the first number of transformers is less than the third number of electrolysis systems.

7. The hydrogen production facility of any of claims 1 or 4-6, wherein the second number of transformers is less than the fourth number of electrolysis systems.

8. The hydrogen production facility of claim 1, wherein the plurality of electrolysis systems are included in a modular structure that further comprises:
a set of power conversion units; and
a set of separators, wherein the plurality of electrolysis systems, the set of power conversion units, and the set of separators are installable in the modular structure prior to the modular structure being provided to and installed in the hydrogen production facility.

9. The hydrogen production facility of any of claims 1 or 8, further comprising a second modular structure that is different than the modular structure, the second modular structure comprising:
a second plurality of electrolysis systems that is different than the plurality of electrolysis systems;
a second set of power conversion units that is different than the set of power conversion units; and
a second set of separators that is different than the set of separators, wherein the second plurality of electrolysis systems, the second set of power conversion units, and the second set of separators are installable in the second modular structure prior to the second modular structure being provided to and installed in the hydrogen production facility.

10. The hydrogen production facility of any of claims 1 or 8-9, wherein:
the modular structure comprises a first housing that comprises a first set of walls;
the plurality of electrolysis systems has a first distance measured between a first end of each electrolysis system of the plurality of electrolysis systems and at least one wall of the first set of walls; and
the plurality of electrolysis systems has a second distance measured between a second end of each electrolysis system of the plurality of electrolysis systems and a third end of an adjacent electrolysis system of the plurality of electrolysis systems.

11. The hydrogen production facility of any of claims 1 or 8-10, wherein:
the second modular structure comprises a second housing that comprises a second set of walls;
the second plurality of electrolysis systems has a third distance measured between a first end of each electrolysis system of the second plurality of electrolysis systems and at least one wall of the second set of walls;
the second plurality of electrolysis systems has a fourth distance measured between a second end of each electrolysis system of the second plurality of electrolysis systems and a third end of an adjacent electrolysis system of the second plurality of electrolysis systems; and
the first distance is the same as the third distance and the second distance is the same as the fourth distance.

12. A hydrogen production facility comprising:
a first modular structure comprising:
a first set of electrolysis systems;
a first set of power conversion units; and
a first set of separators, wherein the first set of electrolysis systems, the first set of power conversion units, and the first set of separators are installable in the first modular structure prior to the first modular structure being provided to and installed in the hydrogen production facility; and
a second modular structure that is different than the first modular structure, the second modular structure comprising:
a second set of electrolysis systems that is different than the first set of electrolysis systems;
a second set of power conversion units that is different than the first set of power conversion units; and
a second set of separators that is different than the first set of separators, wherein the second set of electrolysis systems, the second set of power conversion units, and the second set of separators are installable in the second modular structure prior to the second modular structure being provided to and installed in the hydrogen production facility.

13. The hydrogen production facility of claim 12, wherein:
the first modular structure comprises a first housing that comprises a first set of walls;
the first set of electrolysis systems has a first distance measured between a first end of each electrolysis system of the first set of electrolysis systems and at least one wall of the first set of walls; and
the first set of electrolysis systems has a second distance measured between a second end of each electrolysis system of the first set of electrolysis systems and a third end of an adjacent electrolysis system of the first set of electrolysis systems.

14. The hydrogen production facility of any of claims 12-13, wherein:
the second modular structure comprises a second housing that comprises a second set of walls;
the second set of electrolysis systems has a third distance measured between a first end of each electrolysis system of the second set of electrolysis systems and at least one wall of the second set of walls;
the second set of electrolysis systems has a fourth distance measured between a second end of each electrolysis system of the second set of electrolysis systems and a third end of an adjacent electrolysis system of the second set of electrolysis systems; and
the first distance is the same as the third distance and the second distance is the same as the fourth distance.

15. The hydrogen production facility of claim 12, wherein the first modular structure and the second modular structure are installable in the hydrogen production facility to form a first structure and a second structure, wherein the first structure has a first interior and a first roof, wherein the second structure has a second interior and a second roof, and wherein the first structure and the second structure are positionable offset from one another.
